# EUROPÄISCHE PATENTSCHRIFT

(11) **EP 1 420 495 B1**
(45) Veröffentlichungstag und Bekanntmachung des Hinweises auf die Patenterteilung: **06.01.2010**
(21) Anmeldenummer: 02405982.6
(22) Anmeldetag: 15.11.2002
(51) Int. Cl.: H02H 1/00

(54) **Installation einer Schutzfunktion in einem Schutzgerät eines elektrischen Energieverteilnetzes**
Installation of one protection function in an protection apparatus of a power distribution network
Installation d'une fonction de protection dans un appareil de protection d'un réseau de distribution d'électricité

(43) Veröffentlichungstag der Anmeldung: 19.05.2004
(73) Patentinhaber: ABB Research Ltd., 8050 Zürich (CH)
(72) Erfinder: Deck, Bernhard, D-79809 Weilheim (DE); Crevatin, Mario, 8409 Winterthur (CH); Körbächer, Catherine, 5405 Baden-Dättwil (CH); Züger, Hans-Peter, 5212 Hausen (CH); Rudolf, Paul, CH-5234 Villigen (CH)
(74) Vertreter: ABB Patent Attorneys

(56) Entgegenhaltungen:
- EP-A- 0 935 327
- EP-A- 1 189 324
- DE-A- 19 722 898

## Beschreibung

### Technisches Gebiet

Die Erfindung bezieht sich auf das Gebiet der Anlagenleittechnik, insbesondere der Anlagenleittechnik für Hoch- Mittel- oder Niederspannungsschaltanlagen. Sie bezieht sich auf ein Verfahren zur Installation einer programmierbaren Schutzfunktion in einem Schutzgerät eines elektrischen Energieverteilnetzes gemäss dem Oberbegriff des Patentanspruchs 1, auf ein Schutzgerät gemäss dem Oberbegriff des Patentanspruchs 5, auf eine Unterstation gemäss dem Patentanspruch 6 und auf ein Computerprogramm zur Auswertung eines Lizenzstatus eines Schutzgerätes.

### Stand der Technik

Aus EP 0 935 327 A1 ist ein Verfahren gemäss dem Oberbegriff des Anspruchs 1 bekannt. Weiter ist aus der DE 197 22 989 A1 ein System zur ferngesteuerten Überwachung eines elektronischen Überstromauslösers bekannt.

Eine Anlage, insbesondere eine Hoch- oder Mittelspannungsschaltanlage, wird durch ein verteiltes Anlagenleitsystem aus Feldleitgeräten, die über Kommunikationsbusse miteinander verbunden sind, gesteuert. Ein Anlagenleitsystem weist beispielsweise Feldleitgeräte und eine Bedienstation auf, sowie verschiedene Kommunikationsbusse und Buskoppler. Die Leitgeräte steuern, regeln, überwachen und schützen Primärgeräte der Anlage, welche den eigentlichen Anlagenzweck erfüllen. Primärgeräte sind beispielsweise Leistungsschalter, Trenner, Freileitungen, Transformatoren, Generatoren oder Motoren.

Schutzfunktionen überwachen das korrekte Funktionieren der Anlage. Schutzfunktionen sind beispielsweise Überstromschutz, Distanzschutz, oder Differentialschutz aufgrund von Strom- oder Phasensignalen. Wird ein Fehler wie z.B. ein Kurzschluss detektiert, so wird typischerweise eine Leitung vom Netz getrennt. Fehler aufgrund äusserer Einwirkungen oder eines Versagens eines Anlagenteils müssen mit sehr hoher Zuverlässigkeit detektiert werden. In manchen Anwendungen müssen dabei aber Abschaltungen aufgrund von falsch erkannten Fehlern unbedingt vermieden werden. Um diesen widersprüchlichen Anforderungen zu genügen, sind entsprechende Schutzfunktionen sehr komplex und aufwendig in der Entwicklung. In anderen Anwendungen genügen weniger komplexe Schutzfunktionen. Die Kosten für ein Schutzgerät richten sich nach den Kosten für die installierte Schutzfunktion.

Im Verlauf der Lebensdauer einer Schaltanlage und der dazugehörigen Schutzgeräte können sich die Anforderungen an den Schutz ändern. Beispielsweise wird die übertragene Leistung erhöht, oder die Sicherheitsanforderungen des Netzbetreibers ändern sich. Angepasste Schutzfunktionen müssen dann, gemäss dem Stand der Technik, vor Ort durch einen Servicetechniker im Schutzgerät installiert werden.

### Darstellung der Erfindung

Es ist deshalb Aufgabe der Erfindung, ein Verfahren zur Installation einer programmierbaren Schutzfunktion in einem Schutzgerät eines elektrischen Energieverteilnetzes der eingangs genannten Art zu schaffen, welche eine vereinfachte und flexiblere Installation ermöglicht. Eine weitere Aufgabe der Erfindung ist, ein Schutzgerät, eine Unterstation und ein Computerprogramm zu schaffen, welche die Durchführung des erfindungsgemässen Verfahrens erlauben.

Diese Aufgabe lösen ein Verfahren zur Installation einer programmierbaren Schutzfunktion in einem Schutzgerät eines elektrischen Energieverteilnetzes, ein Schutzgerät, eine Unterstation und ein Computerprogramm mit den Merkmalen der Ansprüche 1, 5, 6 und 7.

Mit dem erfindungsgemässen Verfahren und Schutzgerät wird es möglich, Schutzfunktionen von einem räumlich entfernten Funktionsserver automatisch zu installieren, ohne dass eine Bedienperson zum Schutzgerät reisen muss. Dadurch wiederum wird es in wirtschaftlicher Weise möglich, Schutzfunktionen für eine begrenzte Zeitdauer zu installieren und ihre Verwendung zu lizenzieren.

In einer bevorzugten Variante des Verfahrens existiert ein Lizenzverwaltungsmittel, welches einen Lizenzstatus des Schutzgerätes ermittelt. Es wird eine Nutzung der Schutzfunktion, das heisst die Übermittlung oder das Laden oder das Ausführen der Beschreibung der Schutzfunktion, vom Lizenzstatus abhängig gemacht.

Damit wird es möglich, Schutzfunktionen flexibel und entsprechend wechselnden Bedürfnissen eines Anlagenbetreibers einzusetzen.

Ein Computerprogramm zur Auswertung des Lizenzstatus führt bei Ausführung die folgenden Schritte durch:
- Auswahl einer Schutzfunktion nach Massgabe des Lizenzstatus,
- Übermittlung einer Beschreibung der Schutzfunktion an das Schutzgerät, und
- Freigabe einer Nutzung der Schutzfunktion.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: eine schematische Darstellung einer Schaltanlage und eines zugeordneten Leitsystems; und
- Figur 2: schematisch ein erfindungsgemässes Schutzgerät und seine Umgebung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

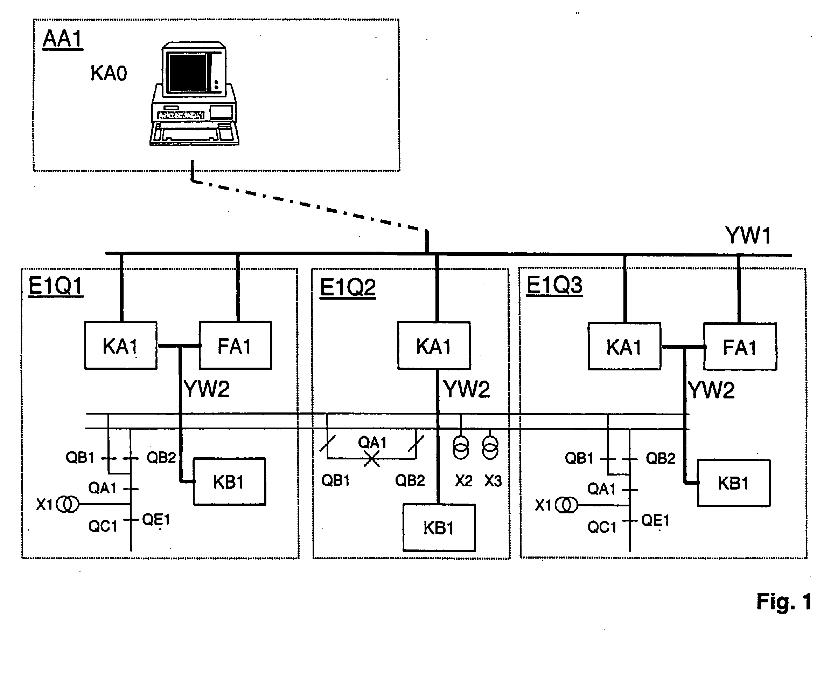

Figur 1 zeigt eine schematische Darstellung einer Schaltanlage oder Unterstation eines elektrischen Energieverteilnetzes und eines zugeordneten Leitsystems. Die Darstellung zeigt drei Felder E1Q1, E1Q2 und E1Q3 einer Schaltanlage und eine Bedienstation AA1 mit einem Datenverarbeitungsgerät KA0 mit üblichen Ein- und Ausgabemitteln zur Bedienung durch einen Benutzer. Die Bedienstation AA1 ist in der Unterstation selber angeordnet oder entfernt in einer Bedienzentrale eines Netzbetreibers angeordnet und über ein Kommunikationsnetzwerk mit einem übergeordneten Bus YW1 der Unterstation verbunden. Die einzelnen Felder E1Q1, E1Q2 und E1Q3 weisen jeweils Leitgeräte auf, welche Steuergeräte KA1, Schutzgeräte FA1 oder Ein/Ausgabegeräte KB1 sind.

Die Bezeichnungen KA1, FA1, KB1, YW1, etc. bezeichnen reale Geräte und Leitsystemfunktionen einer Anlage. Um ein bestimmtes Gerät eindeutig zu bezeichnen, wird ihm die Bezeichnung des Feldes vorangestellt. So bezeichnet beispielsweise E1Q1QA1 einen Schalter QA1 des Feldes E1Q1.

Auf den Leitgeräten sind Leitsystemfunktionen zur Steuerung und Überwachung der Primärgeräte installiert. Die Leitgeräte sind durch Kommunikationsmittel, im Beispiel durch den übergeordneten Bus YW1 und durch Prozessbusse YW2 miteinander verbunden. Den Leitsystemfunktionen sind Primärgeräte wie beispielsweise Schalter QA1, Trenner QB1,QB2 und Spannungsgeber respektive Spannungsmessgeräte X1, X2, X3 zugeordnet. Die Primärgeräte sind durch leistungsführende elektrische Verbindungen miteinander verbunden, also z.B. über Sammelschienen, Feldknoten und Leitungsabgänge.

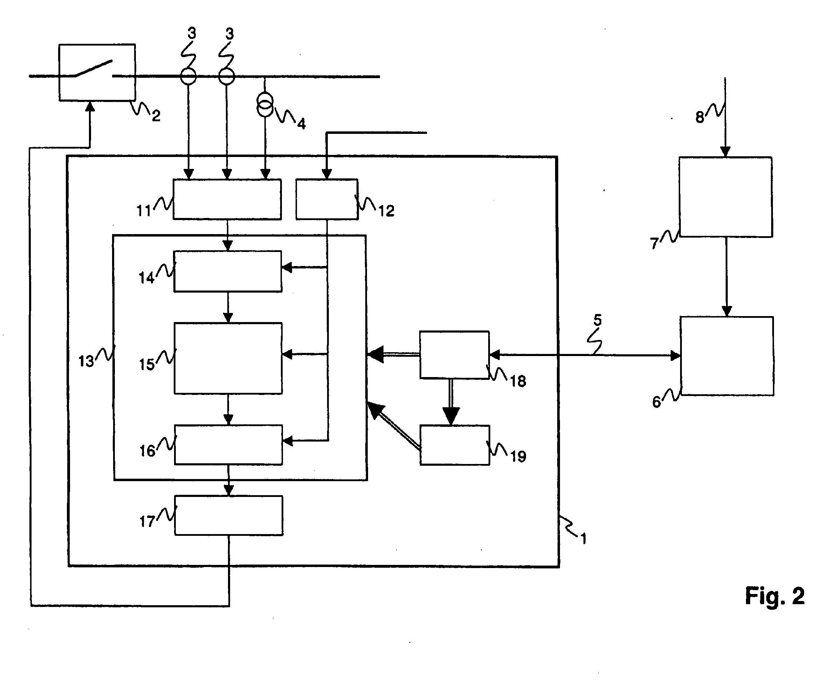

Figur 2 zeigt schematisch ein erfindungsgemässes Schutzgerät 1 einer Unterstation und seine Umgebung. Eine Signalkonditionierung 11 erfasst Messignale von Strommessgeräten 3 und Spannungsmessgeräten 4 des Energieverteilnetzes, insbesondere einer Schaltanlage. Die Signalkonditionierung 1 1 führt eine Konditionierung und eine Analog-Digital-Wandlung der Messsignale durch und übermittelt entsprechende digital codierte Messwerte an ein programmierbares Modul 13. Das programmierbare Modul 13 weist eine Messwertverarbeitung 14 zur Filterung von Messwerten und zur Berechnung von beispielsweise Leistung aus Spannung und Strom auf. Derart gefilterte und berechnete Messwerte werden einem Schutzfunktionskern 15 zugeführt, welcher einen mehr oder weniger komplexen Kern der Schutzfunktion implementiert. Digitaleingänge 12 zur Auswahl von Schutzfunktionen oder zur Unterdrückung von Schaltbefehlen werden dem programmierbaren Modul 13 ebenfalls zugeführt. Im Betrieb des Schutzgerätes 1 ermittelt der Schutzfunktionskern 15, ob ein Störfall vorliegt und ein Schaltbefehl an ein zugeordnetes Primärgerät, in diesem Beispiel ein Schalter 2, ergehen sollte. Ein solcher Schaltbefehl wird einer Schutzlogik 16 übermittelt, welche ihn optional mit anderen digitalen Signalen verknüpft, insbesondere mit Sperrsignalen, welche eine Weiterleitung des Schaltbefehls unterbinden können. Ein entsprechendes Ausgangssignal der Schutzlogik 16 wird in einem Digitalausgang 17 gewandelt und dem Schalter 2 zugeführt. Dies geschieht beispielsweise durch speziell zugeordnete Leitungen wie Lichtwellenleiter, oder über einen Prozessbus YW2.

In einer bevorzugten Ausführungsform der Erfindung weist das Schutzgerät 1 eine Kommunikationsschnittstelle 18 auf, welche zur Kommunikation mit einem Funktionsserver 6 über eine Kommunikationsverbindung 5 dient. Die Kommunikationsverbindung 5 ist beispielsweise eine temporäre Punkt-zu-Punkt Verbindung oder eine Verbindung gemäss einem Internet-Protokoll wie http, FTP (File Transfer Protocol) oder TelNet. Die Verbindungen basieren vorzugsweise auf dem bekannten TCP/IP Protokoll. Der Funktionsserver 6 speichert mehrere unterschiedliche Schutzfunktionen, welche nach Massgabe eines Lizenzstatus über die Kommunikationsverbindung 5 an das Schutzgerät 1 übermittelbar und im programmierbaren Modul 13 ladbar und ausführbar sind. Der Lizenzstatus wird in einer bevorzugten Ausführungsform der Erfindung durch ein Lizenzverwaltungsmittel 7 ermittelt, verwaltet, und bei Bedarf dem Funktionsserver 6 übermittelt. Der Lizenzstatus beinhaltet für jedes betroffene Schutzgerät 1 die Information, welche Schutzfunktion in welchem Zeitraum, also zwischen vorgegebenen Anfangs- und Endzeitpunkten, genutzt werden darf respektive ausführbar sein soll.

Das Lizenzverwaltungsmittel 7 ist ein Computerprogramm zur Ermittlung und Verwaltung des Lizenzstatus: Es bietet vorzugsweise eine Benutzerschnittstelle 8 zur Modifikation des Lizenzstatus. In einer bevorzugten Ausführungsform der Erfindung ist die Benutzerschnittstelle 8 über ein Kommunikationsnetzwerk wie beispielsweise dem Internet oder World Wide Web einem Netzbetreiber zugänglich. Dabei wird die Auswahl einer bestimmten Schutzfunktion mit einer Zahlung einer Lizenzgebühr verknüpft: der Lizenzstatus der Schutzfunktion erlaubt nur dann eine Nutzung der Schutzfunktion, d.h. eine Übermittlung der Beschreibung der Schutzfunktion an das Schutzgerät 1 und/oder ein Laden der Beschreibung in das programmierbare Modul 13, falls das Lizenzverwaltungsmittel 7 eine Bestätigung einer Zahlung der Lizenzgebühr erhält.

Der Funktionsserver 6 und das Lizenzverwaltungsmittel 7 sind jeweils als Computerprogramme auf unterschiedlichen oder auf derselben Datenverarbeitungseinheit(en) und mit zugeordneten Datenspeichern implementiert. Sie befinden sich vorzugsweise unter Kontrolle und in Räumlichkeiten eines Herstellers des Schutzgerätes 1 und werden durch diesen mit neuen Schutzfunktionen versehen.

In einer bevorzugten Ausführungsform der Erfindung weist das Schutzgerät 1 einen Funktionsspeicher 19 auf, in welchem eine oder mehrere Beschreibungen von Schutzfunktionen speicherbar sind. Dies erlaubt, eine geladene Schutzfunktion durch das Laden einer im Funktionsspeicher 19 gespeicherten anderen Schutzfunktion auszutauschen, ohne dass die Schutzfunktionen über die Kommunikationsverbindung 5 übermittelt werden müssen. Ein Befehl zum Austausch der Schutzfunktionen ist dabei entweder lokal am Schutzgerät oder ferngesteuert über die Bedienstation KA0 oder über die Kommunikationsverbindung 5 auslösbar. Ein solcher Befehl ist aber auch beispielsweise timergesteuert auslösbar: Dadurch kann eine Schutzfunktion über die Kommunikationsverbindung 5 übermittelt, im Funktionsspeicher 19 gespeichert und erst zu einem vorbestimmten Zeitpunkt in das programmierbare Modul 13 geladen werden. In einer weiteren bevorzugten Ausführungsform der Erfindung ist im Funktionsspeicher 19 eine Basis-Schutzfunktion gespeichert, welche einen vorgegebenen minimalen Schutz implementiert. Falls eine Lizenz für eine geladene Schutzfunktion nach Massgabe des Lizenzstatus abgelaufen ist, wird automatisch die Basis-Schutzfunktion geladen.

In einer bevorzugten Ausführungsform der Erfindung weist das programmierbare Modul 13 einen Digitalrechner mit einem Programmspeicher auf, und ist die Beschreibung der Schutzfunktion ein Computerprogramm, welches zur Ausführung in den Programmspeicher ladbar ist. Die einzelnen Blöcke Messwertverarbeitung 14, Schutzfunktionskern 15 und Schutzlogik 16 der Schutzfunktion sind jeweils durch ein Teil dieses Computerprogramms implementiert.

In einer anderen bevorzugten Ausführungsform der Erfindung weist das programmierbare Modul 13 einen programmierbaren, typischerweise zumindest teilweise ungetaktet arbeitenden digitalen Logikbaustein auf. Dieser ist beispielsweise ein FPGA (Field Programmable Gate Array) ein PLA (programmierbares logisches Feld) oder ein CPLD (Complex Programmable Logic Device). Die Beschreibung der Schutzfunktion gemäss den einzelnen Blöcken 14,15,16 liegt dabei in einer Standard-Hardwarebeschreibungssprache wie VHDL (VHSIC Hardware Description Language), Verilog oder System-C vor. In einer anderen bevorzugten Ausführungsform der Erfindung sind die einzelnen Blöcke der Schutzfunktion durch einen Bitstrom beschrieben. Der Bitstrom wird in bekannter Weise in die programmierbare Logik 13, resp. den FPGA oder CPLD geladen, um sie zur Ausführung eines bestimmten Hardwaredesigns entsprechend der gewünschten Funktion zu bringen.

In einer weiteren bevorzugten Ausführungsform der Erfindung sind die Signalkonditionierung 11 und/oder der Digitalausgang 17 nicht Teil des Schutzgerätes 1, sondern in separaten Geräten implementiert. Diese separaten Geräte übermitteln die digital codierte Messwerte an die Messwertverarbeitung 14 respektive erhalten die Ausgangssignale der Schutzlogik 16 beispielsweise über einen Prozessbus YW2

Ein Computerprogramm zur Auswertung des Lizenzstatus implementiert die Funktion des Funktionsservers 6 und führt bei Ausführung die folgenden Schritte durch:
- Auswahl einer Schutzfunktion nach Massgabe des vom Lizenzverwaltungsmittel 7 erhaltenen Lizenzstatus,
- Übermittlung einer Beschreibung der Schutzfunktion an das Schutzgerät 1, und
- Freigabe einer Nutzung der Schutzfunktion.
Dabei geschieht die Freigabe der Nutzung entweder durch Übermittlung des Lizenzstatus mit insbesondere dem Anfangszeitpunkt für die Nutzung, zu welchem das Schutzgerät 1 automatisch die Beschreibung der Schutzfunktion aus dem Funktionsspeicher 19 lädt. Oder aber die Nutzungsfreigabe geschieht nach einer Übermittlung eines entsprechenden Freigabebefehls des Funktionsservers 6 an das Schutzgerät 1. Der Freigabebefehl kann zusammen mit der Übermittlung der Beschreibung der Schutzfunktion oder aber zu einem wesentlich späteren Zeitpunkt erfolgen.

Das Computerprogramm zur Auswertung des Lizenzstatus ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein entsprechendes Computerprogrammprodukt ein computerlesbares Medium auf, auf welchem die Computerprogrammcodemittel gespeichert sind.

Eine Datenverarbeitungseinrichtung zur Auswertung des Lizenzstatus weist einen Datenprozessor, einen Speicher, der mit dem Datenprozessor verbunden ist, sowie Computerprogrammcodemittel auf, die in dem Speicher abgelegt sind.

### Bezugszeichenliste

- 1: Schutzgerät
- 2: Primärgerät, Schalter
- 3: Strommessgerät
- 4: Spannungsmessgerät
- 5: Kommunikationsverbindung
- 6: Funktionsserver
- 7: Lizenzverwaltungsmittel
- 8: Benutzerschnittstelle
- 11: Analogeingang, Signalkonditionierung
- 12: Digitaleingang
- 13: programmierbares Modul
- 14: Messwertverarbeitung
- 15: Schutzfunktionskern
- 16: Schutzlogik
- 17: Digitalausgang
- 18: Kommunikationsschnittstelle
- 19: Funktionsspeicher
- QA1: Schalter
- QB1: Trenner
- X1, X2, X3: Spannungsgeber
- YW1: übergeordneter Bus
- YW2: Prozessbus
- KA1: Steuergerät
- FA1: Schutzgerät
- KB1: Ein-/Ausgabegerät

## Patentansprüche

1. Verfahren zur Installation einer programmierbaren Schutzfunktion in einem Schutzgerät (1) eines elektrischen Energleverteilnetzes, wobei das Schutzgerät (1) Mittel zur Verarbeitung (14) von Messwerten aus Messgeräten (3,4) des Energieverteilnetzes und Mittel zum Auslösen (16) von Schaltbefehlen durch Primärgeräte (2) des Energieverteilnetzes aufweist, und die Schutzfunktion, wenn sie ausgeführt wird, die Schaltbefehle nach Massgabe der Messwerte bestimmt, wobei
das Verfahren die folgenden Schritte aufweist
• Übermittlung einer Beschreibung der Schutzfunktion von einem entfernten Funktionsserver (6) über eine Kommunikationsverbindung (5) an das Schutzgerät (1),
• Laden der Beschreibung im Schutzgerät (1), und
• Ausführen der geladenen Beschreibung (14,15,16) der Schutzfunktion, **dadurch gekennzeichnet,**
**dass** ein Lizenzverwaltungsmittel (7) existiert, welches einen Lizenzstatus des Schutzgerätes (1) bestimmt und wobei eine Nutzung der Schutzfunktion, das heisst die Übermittlung oder das Laden oder das Ausführen der Beschreibung der Schutzfunktion, vom Lizenzstatus abhängig ist,
und falls der Lizenzstatus die Nutzung der Schutzfunktion nicht zulässt, eine Basis-Schutzfunktion, welche einen vorgegebenen Schutz implementiert, ausführbar ist.

2. Verfahren gemäss Anspruch 1, wobei der Lizenzstatus eine Nutzung der Schutzfunktion für eine vorgegebene Zeitdauer beinhaltet.

3. Verfahren gemäss Anspruch 1 oder 2, wobei eine Umschaltung zwischen der Schutzfunktion und der Basis-Schutzfunktion ferngesteuert geschieht.

4. Verfahren gemäss Anspruch 1 bis 3, wobei das Lizenzverwaltungsmittel (7) eine Änderung des Lizenzstatus durch einen Betreiber der Unterstation über eine Benutzerschnittstelle (8) zulässt.

5. Schutzgerät (1) eines elektrischen Energieverteilnetzes, wobei das Schutzgerät (1) Mittel zur Verarbeitung von Messwerten (14) aus Messgeräten (3,4) des Energieverteilnetzes, Mittel zum Auslösen von Schaltbefehlen (16) durch Primärgeräte (2) des Energleverteilnetzes, sowie eine programmierbare Schutzfunktion, welche, wenn sie ausgeführt wird, die Schaltbefehle nach Massgabe der Messwerte bestimmt, wobei
das Schutzgerät (1) Mittel zum Empfang (18) einer Beschreibung einer Schutzfunktion über eine Kommunikationsverbindung (5) von einem entfernten Funktionsserver (6) und Mittel zum Laden der Beschreibung aufweist, wobei die geladene Beschreibung der Schutzfunktion (14,15,16) im Schutzgerät (1) ausführbar ist, **dadurch gekennzeichnet, dass**
das Schutzgerät (1) Mittel zur Speicherung (19) einer Basis-Schutzfunktion und Mittel zum wahlweisen Laden und Ausführen entweder der Schutzfunktion oder der Basis-Schutzfunktion aufweist.

6. Unterstation eines elektrischen Energieverteilnetzes mit einem Schutzgerät (1) gemäss Anspruch 5.

7. Computerprogramm zur Auswertung eines Lizenzstatus eines Schutzgerätes (1) gemäss Anspruch 5, welches auf einer Datenverarbeitungseinheit ladbar und ausführbar ist, wobei das Computerprogramm bei Ausführung die folgenden Schritte durchführt:
• Auswahl einer Schutzfunktion nach Massgabe des Lizenzstatus,
• Übermittlung einer Beschreibung der Schutzfunktion an das Schutzgerät (1), und
• Freigabe einer Nutzung der Schutzfunktion,
**dadurch gekennzeichnet, dass** die Freigabe der Nutzung entweder durch Übermittlung des Lizenzstatus mit insbesondere dem Anfangszeitpunkt für die Nutzung, zu welcher das Schutzgerät (1) automatisch die Beschreibung der Schutzfunktion aus dem Funktionsspeicher (19) lädt, oder nach einer Übermittlung eines entsprechenden Freigabebefehls des Funktionsservers (6) an das Schutzgerät (1) geschieht.

8. Computerprogramm gemäss Anspruch 7, **dadurch gekennzeichnet, dass** der Freigabebefehl mit der Übermittlung der Beschreibung der Schutzfunktion erfolgt.

9. Computerprogramm gemäss Anspruch 7, **dadurch gekennzeichnet, dass** der Freigabebefehl zu einem wesentlich späteren Zeitpunkt als die Übermittlung der Beschreibung der Schutzfunktion erfolgt.

## Claims

1. Method for installation of a programmable protective function in a protective device (1) for an electrical power distribution network, with the protective device (1) having means for processing (14) measured values from measurement appliances (3, 4) for the power distribution network, and having means for initiating (16) switching commands by primary appliances (2) for the power distribution network, and the protective function determining the switching commands on the basis of the measured values, when it is carried out,
the method having the following steps:
• transmission of a description of the protective function from a remote function server (6) via a communication link (5) to the protective device (1),
• loading of the description in the protective device (1), and
• implementation of the loaded description (14, 15, 16) of the protective function, **characterized in that** a license management means (7) exists, which determines a license status of the protective device (1), and wherein use of the protective function, that is to say the transmission or the loading or the implementation of the description of the protective function, is dependent on the license status, and if the license status does not allow the use of the protective function, a basic protective function which implements predetermined protection can be carried out.

2. Method according to Claim 1, wherein the license status includes use of the protective function for a predetermined time period.

3. Method according to Claim 1 or 2, wherein switching between the protective function and the basic protective function is remotely controlled.

4. Method according to Claim 1 to 3, wherein the license management means (7) allows a change to the license status by an operator of the substation via a user interface (8).

5. Protective device (1) for an electrical power distribution network, wherein the protective device (1) has means for processing measured values (14) from measurement appliances (3, 4) for the power distribution network, means for initiating switching commands (16) by primary appliances (2) for the power distribution network, as well as a programmable protective function which, when carried out, determines the switching commands on the basis of the measured values,
the protective device (1) having means for receiving (18) a description of a protective function via a communication link (5) from a remote function server (6), and has means for loading the description, wherein the loaded description of the protective function (14, 15, 16) can be carried out in the protective device (1), **characterized in that** the protective device (1) has means for storing (19) a basic protective function, and means for selectively loading and carrying out either the protective function or the basic protective function.

6. Substation for an electrical power distribution network having a protective device (1) according to Claim 5.

7. Computer program for evaluation of a license status of the protective device (1) according to Claim 5, which can be loaded and carried out on a data processing unit, when it is being run, the computer program carrying out the following steps:
• selection of a protective function on the basis of a license status,
• transmission of a description of the protective function to the protective device (1), and
• allowing use of the protective function, **characterized in that** the clearance for use is obtained either by transmission of the licence status with, in particular the initial time for use, at which the protective device (1) automatically loads the description of the protective function from the function memory (19) or this is done after transmission of an appropriate enable command from the function server (6) to the protective device (1).

8. Computer program according to Claim 7, **characterized in that** the enable command is provided with the transmission of the description of the protective function.

9. Computer program according to Claim 7, **characterized in that** the enable command is produced at a significantly later time than the transmission of the description of the protective function.

## Revendications

1. Procédé d'installation d'une fonction programmable de protection dans un appareil de protection (1) d'un réseau de distribution d'énergie électrique,
l'appareil de protection (1) présentant des moyens de traitement (14) de valeurs de mesure provenant d'appareils de mesure (3, 4) du réseau de distribution d'énergie et des moyens de déclenchement (16) d'ordres de commutation par des appareils primaires (2) du réseau de distribution d'énergie,
la fonction de protection définissant lorsqu'elle est exécutée les ordres de commutation en fonction des valeurs de mesure,
le procédé présentant les étapes suivantes :
- transmission à l'appareil de protection (1) d'une description de la fonction de protection, depuis un serveur (6) de fonctions situé à distance et par une liaison de communication (5),
- chargement de la description dans l'appareil de protection (1) et
- exécution de la description (14, 15, 16) chargée de la fonction de protection,
**caractérisé en ce que**
il existe un moyen (7) de gestion de licence qui définit le statut d'une licence de l'appareil de protection (1),
l'utilisation de la fonction de protection, c'est-à-dire la transmission, le chargement ou l'exécution de la description de la fonction de protection, dépendant du statut de la licence, et
au cas où le statut de la licence ne permet pas l'utilisation de la fonction de protection, une fonction de protection de base qui met en oeuvre une protection prédéterminée peut être exécutée.

2. Procédé selon la revendication 1, dans lequel le statut de la licence contient l'utilisation de la fonction de protection pendant une durée prédéterminée.

3. Procédé selon les revendications 1 ou 2, dans lequel la commutation entre la fonction de protection et la fonction de protection de base s'effectue sous l'action d'une commande à distance.

4. Procédé selon les revendications 1 à 3, dans lequel le moyen (7) de gestion de licence permet à l'exploitant de la sous-station de modifier le statut de la licence par l'intermédiaire d'une interface d'utilisateur (8).

5. Appareil de protection (1) d'un réseau de distribution d'énergie électrique, dans lequel l'appareil de protection (1) contient des moyens de traitement de valeurs de mesure (14) provenant d'appareils de mesure (3, 4) du réseau de distribution d'énergie, des moyens de déclenchement d'ordres de commutation (16) par des appareils primaires (2) du réseau de distribution d'énergie ainsi qu'une fonction programmable de protection qui, lorsqu'elle est exécutée, définit les ordres de commutation en fonction des valeurs de mesure,
l'appareil de protection (1) présentant des moyens (18) de réception d'une description d'une fonction de protection par une liaison de communication (5) depuis un serveur (6) de fonctions situé à distance et des moyens de chargement de la description, la description chargée de la fonction de protection (14, 15, 16) pouvant être exécutée dans l'appareil de protection (1),
**caractérisé en ce que**
l'appareil de protection (1) présente des moyens de conservation (19) d'une fonction de protection de base et des moyens pour charger et exécuter sélectivement la fonction de protection ou la fonction de protection de base.

6. Sous-station d'un réseau de distribution d'énergie électrique dotée d'un appareil de protection (1) selon la revendication 5.

7. Programme informatique d'évaluation du statut de la licence d'un appareil de protection (1) selon la revendication 5, qui peut être chargé et exécuté sur une unité de traitement de données, le programme informatique exécutant les étapes suivantes lorsqu'il est exécuté :
- sélection d'une fonction de protection en fonction du statut de la licence,
- transmission de la description de la fonction de protection à l'appareil de protection (1) et
- libération de l'utilisation de la fonction de protection,
**caractérisé en ce que**
la libération de l'utilisation s'effectue par transmission du statut de la licence, avec en particulier l'instant initial de l'utilisation auquel l'appareil de protection (1) charge automatiquement la description de la fonction de protection depuis la mémoire de fonction (19) ou après transmission d'un ordre approprié de libération envoyé par le serveur (6) de fonctions à l'appareil de protection (1).

8. Programme informatique selon la revendication 7, **caractérisé en ce que** l'ordre de libération est exécuté en même temps que la transmission de la description de la fonction de protection.

9. Programme informatique selon la revendication 7, **caractérisé en ce que** l'ordre de libération est exécuté à un instant beaucoup plus tardif que la transmission de la description de la fonction de protection.
